# FASCICULE DE BREVET EUROPEEN

(11) **EP 3 149 318 B1**
(45) Date de publication et mention de la délivrance du brevet: **22.08.2018**
(21) Numéro de dépôt: 15729539.5
(22) Date de dépôt: 20.05.2015
(51) Int. Cl.: F02K 1/06, F02K 1/12, F02K 1/09, F02K 3/04

(54) **NACELLE POUR TURBORÉACTEUR D'AÉRONEF COMPRENANT UNE TUYÈRE SECONDAIRE À PORTES ROTATIVES**
GONDEL FÜR EIN TURBOJET-TRIEBWERK MIT EINEM SEKUNDÄRDÜSENABSCHNITT MIT DREHTÜREN
NACELLE FOR AN AIRCRAFT TURBOJET ENGINE COMPRISING A SECONDARY NOZZLE SECTION WITH ROTARY DOORS

(30) Priorité: 30.05.2014 FR 1454927
(43) Date de publication de la demande: 05.04.2017
(73) Titulaire: Safran Nacelles, 76700 Gonfreville-l'Orcher (FR)
(72) Inventeur: TISSOT, Sarah, 78390 Bois D'arcy (FR); BOUTEILLER, Xavier, 76250 Déville lès Rouen (FR); KERBLER, Olivier, 92160 Antony (FR); GONIDEC, Patrick, 31530 Bretx (FR)
(74) Mandataire: Gaillarde, Frédéric F. Ch.
(86) Numéro de dépôt international: PCT/FR2015/051323
(87) Numéro de publication internationale: WO 2015/181471

(56) Documents cités:
- EP-A1- 2 433 864
- EP-A2- 2 730 773
- WO-A1-2013/021108
- WO-A1-2015/052457
- WO-A2-2008/003889
- US-A- 3 764 096

## Description

La présente demande se rapporte à une nacelle pour turboréacteur d'aéronef comprenant une tuyère secondaire à portes aval.

Un aéronef est mû par plusieurs turboréacteurs logés chacun dans une nacelle.

Une nacelle présente généralement une structure tubulaire comprenant une entrée d'air en amont du turboréacteur, une section médiane destinée à entourer une soufflante du turboréacteur, une section aval abritant un dispositif d'inversion de poussée et destinée à entourer la chambre de combustion du turboréacteur, et est généralement terminée par une tuyère d'éjection dont la sortie est située en aval du turboréacteur.

Cette nacelle est destinée à abriter un turboréacteur double flux apte à générer par l'intermédiaire des aubes de la soufflante en rotation un flux d'air chaud (également appelé flux primaire), issu de la chambre de combustion du turboréacteur, et un flux d'air froid (flux secondaire) qui circule à l'extérieur du turboréacteur à travers un canal annulaire, également appelé veine, formé entre un carénage du turboréacteur et une paroi interne de la nacelle. Les deux flux d'air sont éjectés du turboréacteur par l'arrière de la nacelle.

Le dispositif d'inversion de poussée est, lors de l'atterrissage de l'aéronef, destiné à améliorer la capacité de freinage de celui-ci en redirigeant vers l'avant au moins une partie de la poussée générée par le turboréacteur.

Dans cette phase, le dispositif d'inversion de poussée obstrue la veine de flux d'air froid et dirige ce dernier vers l'avant de la nacelle, générant de ce fait une contre-poussée qui vient s'ajouter au freinage des roues de l'aéronef, les moyens mis en oeuvre pour réaliser cette réorientation du flux d'air froid varient suivant le type d'inverseur.

Les moyens mis en oeuvre pour réaliser cette réorientation du flux froid varient suivant le type d'inverseur. Cependant, la structure d'un inverseur comprend généralement des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots peuvent remplir une fonction de déviation ou simplement d'activation d'autres moyens de déviation.

Par ailleurs, outre sa fonction d'inversion de poussée, le capot d'inverseur appartient à la section aval de la nacelle et présente une partie aval formant la tuyère d'éjection visant à canaliser l'éjection des flux d'air.

La section optimale de la tuyère d'éjection peut être adaptée en fonction des différentes phases de vol, à savoir les phases de décollage, de montée, de croisière, de descente et d'atterrissage de l'avion. Les avantages déjà bien connus de telles tuyères adaptatives, également appelées tuyères à section variable, sont notamment la réduction de bruit ou la diminution de consommation de carburant. Des nacelles pour turboréacteur sont connues par les documents EP2730773 et US3764096. Parmi les tuyères à section variables selon l'antérieur, on connaît notamment celle décrite dans la demande de brevet publiée sous le numéro FR 2 622 929, dont un mode de réalisation est représenté sur la figure 1.

Cette demande se rapporte à une nacelle 1 pour turboréacteur, comprenant une structure interne fixe 2 et un capotage externe 3 comprenant une section amont 5 et une section aval 7 comprenant une tuyère à géométrie variable 9.

Un anneau 10 de la section aval du capotage externe 3 est monté coulissant axialement de façon à créer une ouverture 11 dans le capotage externe 3. Cette ouverture 11 permet à une partie du flux d'air 13 circulant dans le canal annulaire 15 d'être éjectée, ce qui revient à élargir la section de la tuyère formée par le capot.

Bien que ce type de nacelle permette de faire varier la section de la tuyère de façon efficace, il présente certains inconvénients.

La liaison mécanique entre la section amont 5 et la section aval 7 du capotage externe 3 constitue un affaiblissement mécanique de la nacelle.

En plus d'affaiblir le capot d'inversion de poussée, cette liaison mécanique peut aussi engendrer des vibrations de la section aval annulaire du capot au cours du fonctionnement du moteur.

On connaît également de l'art antérieur la tuyère à géométrie variable 9 décrite dans la demande de brevet publiée sous le numéro FR 2 946 696, représentée à la figure 2, dans laquelle la variation de la section de sortie est réalisée par l'intermédiaire de portes 17 montées mobiles en rotation entre une position selon laquelle elles obturent une ouverture 19 du capotage externe 3 et une position selon laquelle elles dégagent ladite ouverture de façon à éjecter une partie du flux d'air secondaire 13 à l'extérieur de la nacelle et, en conséquence, d'augmenter ou de réduire la section de sortie de la nacelle.

Comme représenté, cette tuyère à géométrie variable 9 comprend une portion extrême aval continue 21, en aval de l'ouverture 19 et des portes 17, ce qui permet de d'augmenter sensiblement la tenue structurale de la nacelle, et de résoudre les inconvénients de l'art antérieur.

Toutefois, pour une ouverture significative de la porte, c'est-à-dire pour un pivotement de la porte 17 suffisamment important (position non représentée) pour laisser passer une quantité suffisante de flux d'air secondaire provenant du canal annulaire 15, le flux d'air qui traverse l'ouverture du capotage externe et qui s'échappe de la nacelle diverge, et est dirigé dans une direction quasi-transverse à l'axe longitudinal de la nacelle.

Une telle divergence du flux d'air affecte grandement le profil aérodynamique de la nacelle, et détériore les performances de poussée de l'ensemble propulsif.

De plus, les portes de cette tuyère présentent un bord de fuite 23 relativement large et plan, ce qui entraîne un phénomène de traînée de culot, venant également affecter le profil aérodynamique de la nacelle et limiter les performances de la tuyère.

La présente invention vise à résoudre ces inconvénients, et se rapporte à cet effet à une nacelle pour turboréacteur d'aéronef comprenant :
- une structure interne fixe définissant au moins partiellement un carénage d'un turboréacteur,
- un capotage externe comprenant une section amont et une section aval, ladite section aval comprenant une paroi externe et une paroi interne définissant, avec la structure interne fixe, un canal annulaire d'écoulement d'un flux d'air secondaire, ladite section aval comprenant une tuyère d'éjection dudit flux d'air secondaire, ladite tuyère comprenant :
   ∘ au moins une ouverture définie dans la section aval du capotage externe,
   ∘ au moins une portion extrême aval continue, en aval de ladite ouverture,
   ∘ au moins une porte, traitée acoustiquement ou non, mobile alternativement, lors de l'activation de moyens d'actionnement, entre une position de fermeture obturant ladite ouverture et assurant une continuité aérodynamique de la nacelle, et une position d'ouverture autorisant le passage d'au moins une partie du flux d'air secondaire à travers ladite ouverture, depuis le canal annulaire vers l'extérieur de la nacelle,
   ladite nacelle étant remarquable en ce que les moyens d'actionnement sont conformés, lors de l'activation desdits moyens depuis une position de fermeture vers une position d'ouverture de la porte, pour entraîner ladite porte en un mouvement combiné de translation vers l'amont de la nacelle et de rotation vers l'extérieur de la nacelle, les moyens d'actionnement comprennent: au moins un actionneur comprenant un corps amont solidaire d'une partie fixe de la nacelle, et une tige dont une extrémité est directement reliée à une paroi amont de ladite porte , et au moins une bielle dont une extrémité est reliée au capotage externe de la nacelle et l'autre extrémité est reliée à la porte de la tuyère.
Ainsi, en prévoyant des moyens d'actionnement conformés pour entraîner une porte de tuyère secondaire à la fois en translation vers l'amont de la nacelle et en rotation vers l'extérieur de la nacelle, on limite l'amplitude d'ouverture de la porte tout en satisfaisant aux exigences de variation de la section de sortie de la tuyère.

En d'autres termes, une telle cinématique d'ouverture de la porte permet de déplacer la porte dans une position qui permet de rediriger le flux d'air secondaire s'échappant de l'ouverture de la nacelle vers l'aval de la nacelle, en direction de l'axe longitudinal de la nacelle, le long de la paroi externe du capotage externe de la nacelle.

Grâce à cette cinématique, l'angle de rotation de la porte reste modeste ; on limite ainsi par rapport à l'art antérieur la divergence du flux d'air qui s'échappe de l'ouverture, ce qui permet de maîtriser et d'améliorer sensiblement la performance aérodynamique de la nacelle.

Ainsi, en rendant convergent le flux d'air secondaire qui s'échappe de l'ouverture prévue dans le capotage externe de la nacelle, on améliore, *in fine*, les performances de poussée de l'ensemble propulsif.

Selon des caractéristiques toutes optionnelles de la nacelle selon l'invention :
- la porte comprend un bord de fuite conformé pour recouvrir au moins partiellement la portion extrême aval continue de la tuyère, ce qui permet de définir une continuité aérodynamique de la paroi interne et de la paroi externe de la nacelle au niveau de la zone entre la porte et la portion extrême aval continue de la tuyère ;
- le bord de fuite de la porte présente un profil courbe, ce qui permet d'améliorer la convergence du flux d'air éjecté vers l'axe longitudinal de la nacelle ; le bord de fuite de la porte présente un profil effilé de sorte que la tangente à l'intrados de la porte est sensiblement parallèle à la paroi de la portion extrême aval continue positionnée en regard du bord de fuite de la porte, ce qui permet de canaliser le flux d'air secondaire dans une direction sensiblement parallèle à l'axe longitudinal de la nacelle, ce qui permet d'améliorer la poussée de l'ensemble propulsif ;
- des moyens d'étanchéité sont disposés entre la porte et le capotage externe, et sont agencés pour s'opposer à l'écoulement de l'air sur le pourtour de la porte et à travers l'ouverture lorsque la porte est en position fermée, ce qui permet d'éviter que de l'air qui circule dans le canal annulaire ne s'écoule à travers la porte et l'ouverture associée lorsque la porte est en position fermée ;
- la porte ou le capotage externe comprend en outre au moins une bavette latérale fixe ou mobile à proximité de l'ouverture ;
- la section amont du capotage externe et la portion extrême aval continue de la tuyère sont réalisées d'un seul tenant, ce qui assure une bonne tenue structurale de la nacelle ;
- la porte en position fermée laisse passer un débit de fuite contrôlé dans le canal afin d'obtenir un gain de traînée nacelle ;
- la tuyère comprend une pluralité d'ouvertures qui sont réparties de façon circulaire autour d'un axe longitudinal de la nacelle et qui sont chacune obturées par une porte lorsque ladite porte est dans sa position de fermeture ;
- la porte peut être traitée acoustiquement ;
- un dispositif d'inversion de poussée, équipe la nacelle selon l'invention.

D'autres caractéristiques et avantages de l'invention apparaîtront à la lecture de la description détaillée qui suit pour la compréhension de laquelle on se reportera aux dessins annexés dans lesquels :
- la figure 1 illustre en coupe longitudinale une nacelle de l'art antérieur, comprenant une tuyère à géométrie variable comprenant un anneau aval mobile en translation ;
- la figure 2 représente en coupe longitudinale une nacelle selon l'art antérieur équipée d'une tuyère à géométrie variable dans laquelle la variation de la section de sortie de la tuyère est réalisée par l'intermédiaire de portes mobiles en rotation ;
- la figure 3 est une vue isométrique qui illustre un ensemble propulsif comprenant une nacelle selon l'invention entourant un turboréacteur d'aéronef ;
- la figure 4 représente la nacelle en coupe longitudinale selon les lignes A-A et B-B de la figure 3, la porte étant représentée en position fermée ;
- la figure 5 est une vue isométrique de la porte, illustrant une variante de réalisation de la liaison entre l'actionneur et la porte ;
- la figure 6 est une vue isométrique de la porte, centrée sur sa paroi latérale, illustrant un mode de liaison entre la porte et la structure fixe de la nacelle ;
- la figure 7 est une vue centrée sur la porte de la tuyère équipant la nacelle selon l'invention, la porte étant représentée en position fermée ;
- la figure 8 est une vue en coupe transversale selon la ligne C-C de la figure 7 ;
- la figure 9 représente la nacelle en coupe longitudinale selon les lignes A-A et B-B de la figure 3, la porte étant représentée en position ouverte ;
- les figures 10 à 13 illustrent la nacelle en coupe longitudinale selon la ligne A-A de la figure 3, sur lesquelles sont représentées quatre variantes de réalisation des moyens d'étanchéité prévus entre la porte et le capotage externe de la nacelle ;
- la figure 14 est une vue centrée sur la porte de la tuyère équipant la nacelle selon l'invention, la porte étant représentée en position fermée et étant équipée de bavettes latérales.

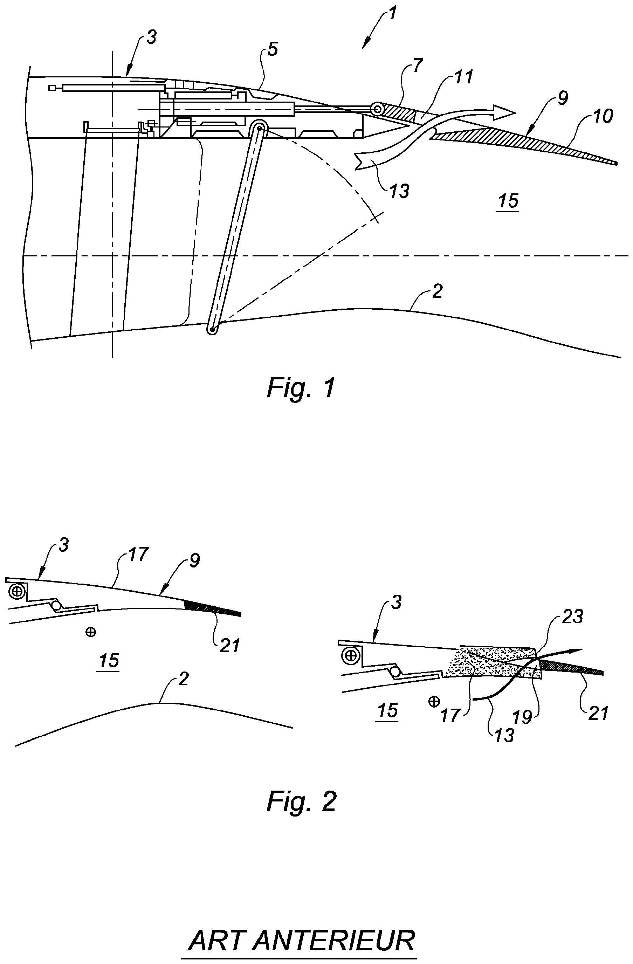

A noter que dans la description et dans les revendications, les termes « amont » et «aval » doivent s'entendre par rapport à la circulation du flux d'air à l'intérieur de l'ensemble propulsif formé par la nacelle et le turboréacteur, c'est-à-dire de la gauche vers la droite en référence aux figures 1 à 14.

De même, on utilisera à titre non limitatif les expressions « interne » et « externe » en référence à l'éloignement radial par rapport à l'axe longitudinal de la nacelle, l'expression « interne » définissant une zone radialement plus proche de l'axe longitudinal de la nacelle, par opposition à l'expression « externe ».

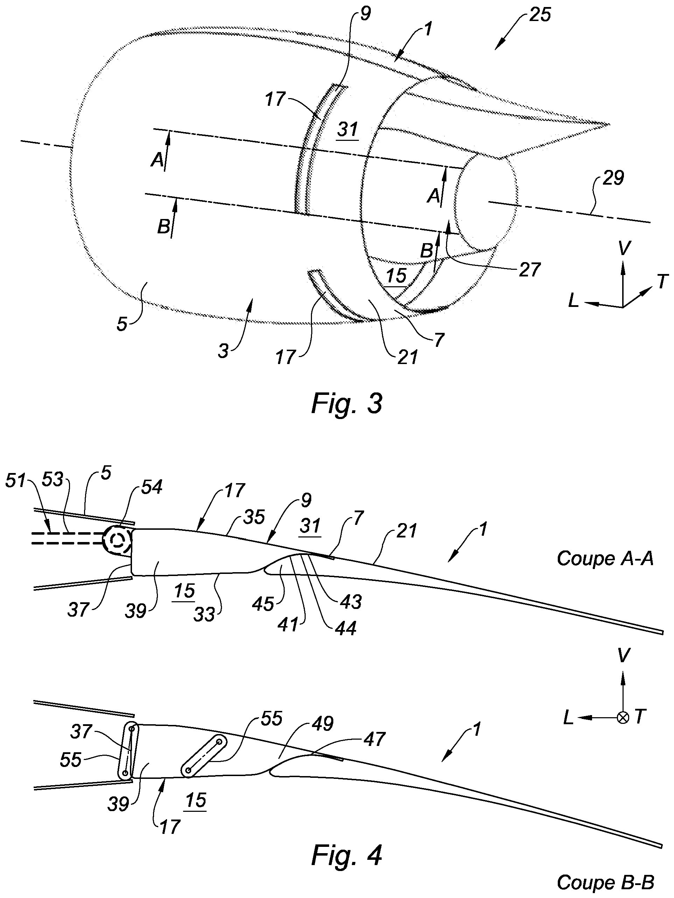

Par ailleurs, dans la description et les revendications, pour clarifier la description et les revendications, on adoptera à titre non limitatif la terminologie longitudinal, vertical et transversal en référence au trièdre direct L, V, T indiqué aux figures, dont l'axe longitudinal L est parallèle à l'axe longitudinal 29 de la nacelle représenté sur la figure 3.

En outre, sur l'ensemble des figures, des références identiques ou analogues représentent des organes ou ensembles d'organes identiques ou analogues.

On se réfère à la figure 3, sur laquelle on a représenté un ensemble propulsif 25 comprenant une nacelle 1 selon l'invention entourant un turboréacteur 27.

La nacelle 1 est destinée à être suspendue à un mât réacteur (non représenté) par l'intermédiaire d'un îlot de fixation (non représenté) formant interface de liaison.

La nacelle 1 comprend un capotage externe 3 comprenant une section amont 5 et une section aval 7 comprenant une tuyère à géométrie variable 9 d'éjection d'une partie du flux d'air secondaire circulant dans un canal annulaire 15 défini entre la structure interne fixe de la nacelle et la paroi interne du capotage externe.

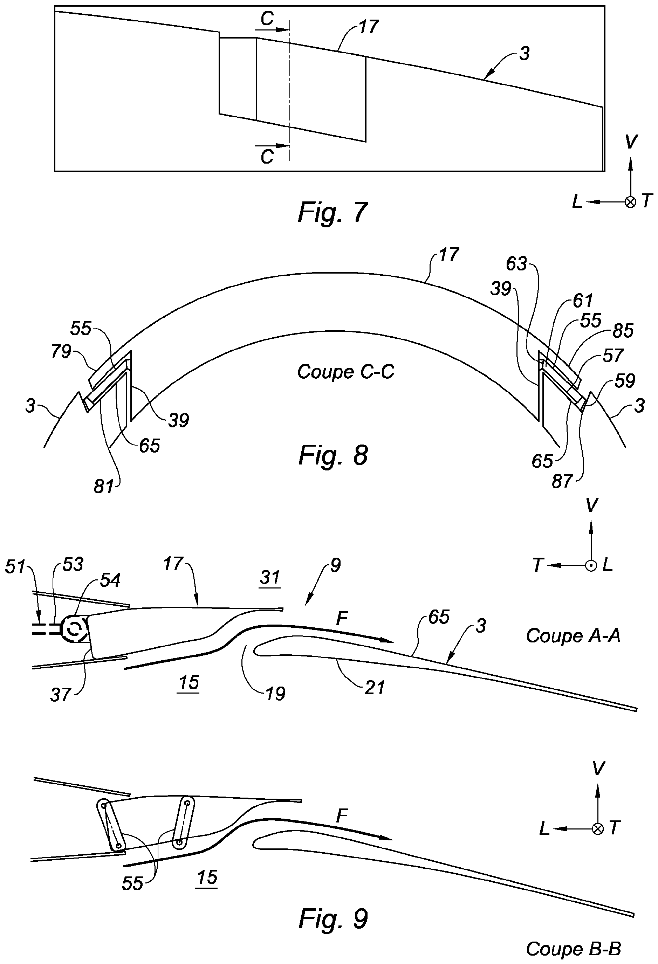

La tuyère à géométrie variable 9 comprend une pluralité d'ouvertures 19 (dont une est visible sur la figure 9), par exemple quatre (seulement deux ouvertures sont visibles sur la figure 3), réparties de façon circulaire autour d'un axe longitudinal 29 de la nacelle.

Bien sûr, la tuyère peut tout à fait comprendre plus de quatre ouvertures, par exemple six. Elle peut également (sur des nacelles de faible diamètre) n'en comprendre que deux ou trois.

Ces ouvertures présentent chacune une forme de fente ouverte radialement vers l'extérieur 31 de la nacelle 1, et définissent un passage entre le canal annulaire 15 de circulation du flux d'air secondaire et l'extérieur 31 de la nacelle.

Ces ouvertures sont chacune obturée par une porte 17 mobile alternativement entre une position de fermeture obturant son ouverture 19 associée et une position d'ouverture autorisant le passage à travers ladite ouverture 19 d'au moins une partie du flux d'air secondaire, depuis le canal annulaire 15 vers l'extérieur 31 de la nacelle.

Pour ne pas alourdir la description, seul un ensemble constitué d'une ouverture 19 et d'une porte 17 associée est décrit en détails par la suite, les ouvertures 19 et les portes 17 associées étant toutes similaires.

En aval de ces ouvertures, la tuyère à géométrie variable 9 présente une portion extrême aval continue 21, réalisée d'un seul tenant avec la section amont 5 du capotage externe 3. En d'autres termes, l'ensemble du capotage externe 3, comprenant en outre la section amont 5 et la portion extrême aval continue 21, est réalisé d'un seul tenant, et les ouvertures 19 sont réalisées dans ce capotage externe.

On se réfère à la figure 4 illustrant la nacelle 1 vue en coupe longitudinale le long de plans passant respectivement par les lignes A-A et B-B de la figure 3, la porte 17 étant représentée en position fermée.

La porte 17 comprend une paroi interne 33 et une paroi externe 35.

Les parois interne 33 et externe 35 sont immobiles l'une par rapport à l'autre, ce qui simplifie la conception par rapport à une porte comprenant une peau interne et une peau externe mobile l'une par rapport à l'autre.

Les parois interne et externe de la porte sont structurellement liées entre elles par une paroi amont 37, deux parois latérales 39 et une paroi aval 41 définissant un bord de fuite 43 de la porte 17. Cette structure pourra bien évidemment être renforcée par des lisses ou des cadres internes selon les pratiques reconnues par l'homme du métier. La porte 17 peut recevoir un traitement acoustique, par exemple de type sandwich. Sur des lignes minces ce sandwich peut avantageusement remplir tout l'intérieur de la structure entre les parois 33 et 35.

Lorsque la porte 17 occupe sa position fermée, la paroi interne 33 de la porte assure une continuité aérodynamique interne de la nacelle, pour ne pas perturber l'écoulement du flux d'air dans le canal annulaire 15, et la paroi externe 35 de la porte assure la continuité aérodynamique externe du carénage de la nacelle.

La continuité aérodynamique, tant de la paroi interne que de la paroi externe du capotage de la nacelle, est assurée au niveau de la jonction entre le bord de fuite 43 de la porte et la portion extrême aval 21 de la tuyère, grâce à un profil particulier du bord de fuite. A cet effet, le bord de fuite 43 de la porte présente un profil courbe 44 recouvrant avantageusement une partie amont 45 de la portion extrême aval continue 21 de la tuyère.

Le bord de fuite 43 présente un intrados comprenant une partie aval 47 d'épaisseur réduite par rapport à une partie amont 49 dudit bord de fuite

Le bord de fuite 43 présente un profil effilé de sorte que la tangente à l'intrados de la porte 17 soit sensiblement parallèle à la paroi de la portion extrême aval 21 positionnée en regard du bord de fuite de la porte.

En d'autres termes, le bord de fuite 43 est situé dans le prolongement d'une paroi externe du capotage externe de la nacelle de façon à définir une continuité aérodynamique du capotage externe de la nacelle.

La porte 17 est en outre susceptible d'être mise en mouvement par un actionneur 51 du type vérin, comprenant un corps amont (non représenté) solidaire d'une partie fixe de la nacelle, par exemple le capotage externe de la nacelle, et une tige 53 d'actionnement, dont une extrémité libre est directement reliée à la paroi amont 37 de la porte 17. Ce type d'actionneur, par exemple électrique, est bien connu de l'homme du métier ne sera donc pas davantage décrit.

La tige 53 de l'actionneur 51 est montée coulissante longitudinalement dans le corps associé suivant un axe sensiblement parallèle à l'axe longitudinal de la nacelle, et la porte 17 est montée pivotante sur l'extrémité 54 de la tige 53 de l'actionneur 51.

Un unique actionneur suffit au déplacement d'une porte. Toutefois, si l'homme du métier y trouve un intérêt particulier, plusieurs actionneurs 51 peuvent être reliés à la porte 17. Alternativement, un unique actionneur 51 relié à un dispositif de renvoi de mouvement entraîne une pluralité de portes en mouvement.

La porte 17 est en outre reliée au capotage externe de la nacelle grâce à des bielles 55 montées sur les parois latérales 39 de la porte 17.

Chaque paroi latérale 39 de la porte 17 reçoit deux bielles 55, dont la première est montée à proximité de la paroi amont 37 de la porte, et la deuxième est montée en aval de la première.

La disposition des bielles est optimisée en fonction de la cinématique et de leur efficacité structurale. Les bielles 55 sont quasiment tangentes à la paroi interne ou à la paroi externe de la porte. Cette disposition permet de mieux transmettre les efforts de la porte 17 vers le capotage externe 3.

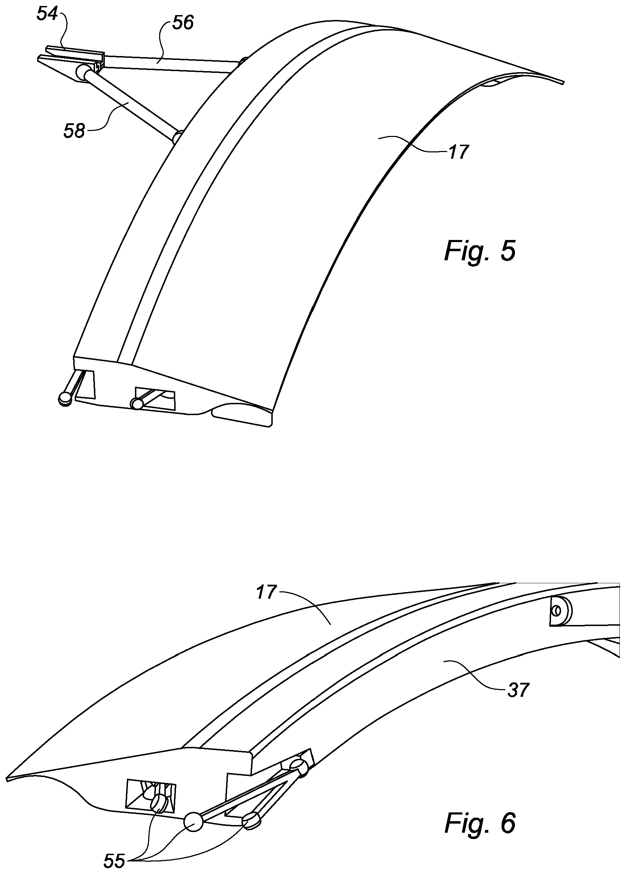

Selon une variante représentée à la figure 5, l'extrémité 54 de la tige de l'actionneur (non représenté) peut être connectée à la porte 17 par deux bielles 56, 58 positionnées dans la continuité de l'actionneur et formant un « V », permettant de stabiliser le mouvement de la porte 17 et d'éviter une torsion de la porte.

Selon une autre variante représentée à la figure 6, chaque paroi latérale de la porte reçoit trois bielles 55. Selon ce mode de réalisation, deux bielles formant un « V » sont montées à proximité de la paroi amont 37 de la porte, et une bielle est montée en aval des bielles formant un « V ». Ce mode de réalisation permet une bonne stabilisation du mouvement de la porte.

Comme représenté plus en détails sur les figures 7 et 8 auxquelles on se réfère à présent, les bielles 55 sont sensiblement tangentes aux parois latérales 79 de la porte, une première extrémité 57 de la bielle 55 est reliée au capotage externe 3 de la nacelle par l'intermédiaire d'une liaison 59, et une deuxième extrémité 61 de la bielle 55 est reliée à la paroi latérale 39 de la porte 17 par l'intermédiaire d'une liaison 63.

La porte 17 peut avantageusement être équipée d'un moyen d'étanchéité latéral prévu entre la porte 17 et l'ouverture 19 associée du capotage externe 3, pour empêcher les fuites d'air latérales, ou transversales, c'est-à-dire selon une direction perpendiculaire à l'axe longitudinal de la nacelle, entre la porte 17 et l'ouverture 19 associée, lorsque la porte 17 occupe sa position fermée.

Le moyen d'étanchéité latéral comprend un premier joint latéral (non représenté) interposé entre un premier bord latéral 79 longitudinal de la porte 17 et un premier bord latéral 81 complémentaire longitudinal de la paroi externe 65 du capotage externe 3.

Par symétrie, le moyen d'étanchéité latéral comprend un second joint latéral (non représenté) interposé entre un second bord latéral 85 longitudinal de la porte 17 et un second bord latéral 87 complémentaire longitudinal de la paroi externe 65 du capotage externe 3.

Le passage d'une porte depuis sa position de fermeture représentée sur la figure 4 vers sa position d'ouverture représentée sur la figure 9, est décrit ci-dessous.

L'actionneur 51 est activé de façon à entraîner une translation vers l'amont de la nacelle de la tige 53, dont l'extrémité 54 est reliée à la paroi amont 37 de la porte 17.

Simultanément au mouvement de translation de la porte vers l'amont de la nacelle, les bielles 55, reliées à la porte 17 et au capotage externe de la nacelle, fixe, entraîne de concert la rotation de la porte 17 vers l'extérieur 31 de la nacelle.

La porte 17 se déplace d'un seul tenant, c'est-à-dire que les parois interne 33 et externe 35 de la porte pivotent autour d'un même axe de rotation instantanée, parallèle à un axe reliant les points d'attache 59 des bielles sur le capotage externe 3 de part et d'autre de la nacelle.

La porte 17 se trouve alors dans une position ouverte, autorisant un échappement d'une partie du flux d'air secondaire s'écoulant du flux secondaire vers l'extérieur de la nacelle par l'ouverture 19, comme représenté de manière schématique par la flèche F, et la section de sortie de la tuyère secondaire est ainsi augmentée.

Grâce à la cinématique particulière d'ouverture de porte qui vient d'être décrite, selon laquelle la porte est à la fois entraînée en translation amont et en rotation, le flux d'air traversant l'ouverture 19 de la tuyère est avantageusement projeté en aval de la nacelle, en direction de l'axe longitudinal de la nacelle, le long d'une paroi externe 65 du capotage externe 3 de la nacelle, ce qui permet de d'assurer la convergence du flux d'air qui s'échappe de l'ouverture 19, et de maîtriser et d'améliorer sensiblement la performance aérodynamique de la nacelle.

De plus, le profil courbe 44 du bord de fuite 43 de la porte 17 améliore également la convergence du flux d'air éjecté vers l'axe longitudinal de la nacelle.

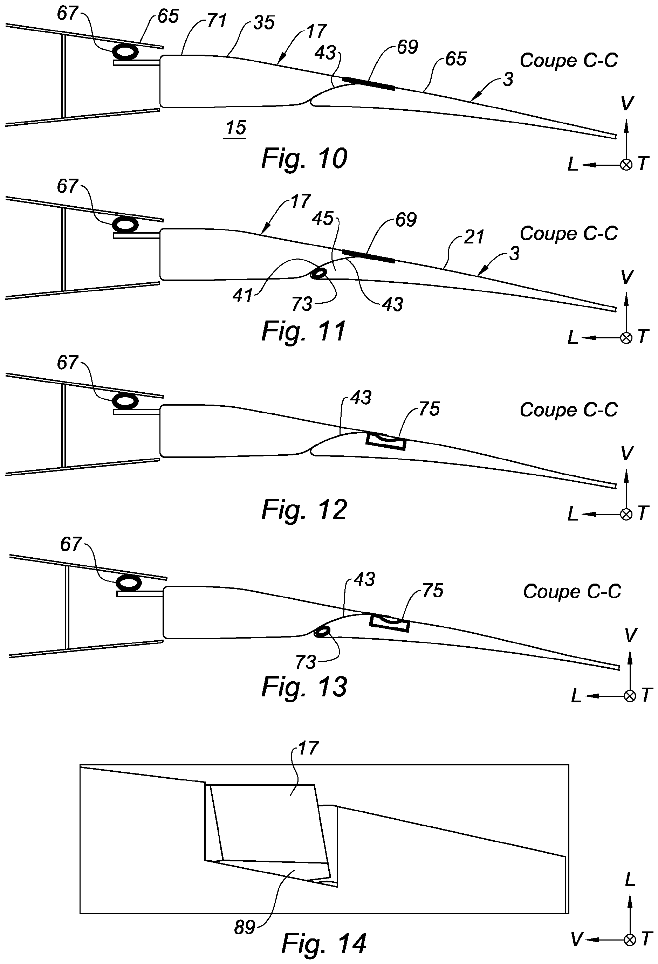

On se réfère à présent aux figures 10 à 13 illustrant la nacelle en coupe longitudinale selon la ligne A-A de la figure 1, sur lesquelles sont représentées quatre variantes de réalisation de moyens d'étanchéité disposés entre la porte 17 et le capotage externe 3 de la nacelle afin d'empêcher que de l'air qui circule dans le canal annulaire 15 ne s'écoule à travers la porte 17 et l'ouverture 19 associée lorsque la porte 17 est en position fermée.

En référence à la figure 10, la porte 17 est équipée d'un joint amont 67 et d'un joint aval 69, tous deux formés en matériau élastomère, formant moyen d'étanchéité entre la porte 17 et l'ouverture 19 associée du capotage externe 3, lorsque la porte 17 occupe sa position fermée.

A cet effet, le joint amont 67, par exemple à bulle ou à lèvre, est interposé entre une portion extrême amont 71 de la paroi externe 35 de la porte 17 et la paroi externe 65 du capot externe 3. Le joint amont 67 peut indifféremment être supporté par la porte 17 ou par le capotage externe 3.

De même, le joint aval 69, par exemple plat, est interposé entre la paroi externe 35 de la porte et la paroi externe 65 du capot externe. Le joint aval 69 est supporté par la porte 17 de façon à ne pas perturber l'écoulement lors de l'ouverture de celle-ci.

En alternative, le joint 69 comprend des renforts agencés de manière à permettre un redressement du joint vers la face interne de la porte lors de son ouverture. Cela permet d'assurer une bonne redirection de l'air s'écoulant au niveau du bord de fuite 43 de la porte tout en prévoyant un profil effilé du bord de fuite.

Dans ce mode de réalisation le joint 69 est alors contraint par élasticité à s'aligner avec la peau externe de la portion extrême aval continue 21 lorsque la porte passe de sa position ouverte vers sa position fermée. Le joint constitue avantageusement un excellent joint de lissage aérodynamique de la zone de jonction entre la porte 17 et la portion extrême aval continue 21.

En référence à la figure 11, l'étanchéité de la porte 17 est assurée d'une part par les joints 67 et 69 précédemment décrits, et d'autre part par un deuxième joint aval 73, également formé en matériau élastomère, par exemple à bulle ou à lèvre, s'interposant entre la paroi aval 41 de la porte 17 et la partie amont 45 de la portion extrême aval continue 21 de la tuyère du capotage externe 3.

En se référant à la figure 12, l'étanchéité de la porte 17 est assurée d'une part par le joint 67 et d'autre part par un joint aval 75 formé en matériau élastomère.

Le joint aval 75 est intégré à la paroi de la portion extrême aval continue 21 de façon à limiter la perturbation aérodynamique lorsque la porte est ouverte, et à accommoder la forme du bord de fuite 43 de la porte lorsque celui-ci s'enfonce dans le joint 75 lorsque la porte 17 est en position fermée. Le joint aval 75 peut indifféremment être supporté par la porte 17 ou par le capotage externe 3 en adaptant sa forme à ces deux cas de figures différents.

Enfin, en se référant à la figure 13, l'étanchéité de la porte 17 est assurée par les joints amont 67 et avals 73 et 75.

Le joint aval 75 est avantageusement précontraint lorsque la porte 17 est en position fermée et se déforme vers l'intérieur lors de l'ouverture de la porte afin d'aligner le flux d'air secondaire traversant l'ouverture 19 le plus parallèlement possible à la paroi externe 65 de la portion extrême aval 21 du capotage externe 3, tout en minimisant la traînée de culot au niveau du bord de fuite 43 de la porte 17 lorsque ladite porte se trouve en position ouverte.

Selon un mode de réalisation alternatif non représenté, aucun moyen d'étanchéité n'est prévu entre le bord de fuite 43 de la porte 17 et la portion extrême aval continue 21. Dans ce cas des points de contacts adaptés en terme de raideur et d'épaisseur sont aménagés entre ces deux pièces ou à l'interface de la porte et du capotage externe. Le canal obtenu dans cette configuration est avantageusement convergent et capte la couche limite de l'écoulement secondaire pour accélérer la couche limite externe le long de l'arrière corps, contribuant ainsi à une diminution de traînée de la nacelle.

De plus, afin d'éviter que de l'air ne s'écoule par les côtés de la porte 17, la porte 17 peut avantageusement comprendre des bavettes latérales rigides 89 agencées de chaque côté de la porte 17, comme on peut le voir sur la figure 14.

Un dispositif de bavettes latérales mobiles reliées à la porte par des liaisons rotulées peut toutefois remplacer les bavettes latérales rigides 89 fixées sur la porte.

Les bavettes précitées contribuent à un écoulement axial du flux d'air secondaire traversant l'ouverture 19 vers l'aval de la nacelle, ce qui permet d'améliorer les performances de poussée de l'ensemble propulsif.

Selon une alternative non représentée sur les figures, les bavettes latérales sont supportées non pas par la porte elle-même mais par le capotage externe.

Comme précédemment, il peut être prévu de relier ces bavettes latérales au capotage externe par l'intermédiaire de liaisons rotules de manière à ce que les bavettes latérales se trouvent dans une position fermée dans laquelle elles sont repliées au dessus de la porte lorsque la porte se trouve en position fermée, et se trouvent dans une position ouverte selon laquelle les bavettes se déploient le long des parois latérales de la porte lorsque la porte passe de sa position fermée vers sa position ouverte.

Selon encore une autre alternative, les bavettes latérales sont à la fois supportées par la porte et par le capotage externe, ce qui permet de bénéficier d'une surface aérodynamique lisse lorsque la porte est en position fermée et d'éviter des jets divergents lorsque la porte est en position ouverte.

Il convient de noter que la description a été faite en rapport avec une nacelle lisse, c'est-à-dire non-équipée d'un dispositif d'inversion de poussée.

Toutefois, la tuyère selon l'invention peut équiper une nacelle pourvue de moyens d'inversion de poussée de flux secondaire de tous types, à grilles ou à portes.

De tels dispositifs d'inversion de poussée sont bien connus de l'homme du métier et ne seront pas d'avantage décrits dans la présente description.

Dans ce cas, les portes de la tuyère sont positionnées en aval des grilles et/ou portes de l'inverseur. Lorsque la nacelle est équipée de moyens d'inversion de poussée, les actionneurs des portes de la tuyère et du ou des capots d'inverseur peuvent être communs, ou ségrégués.

Le corps amont d'un actionneur est monté sur le corps 3 entourant la porte 17.

En outre, des verrous primaires sont conformés pour empêcher un déploiement de l'inverseur quelle que soit la position des portes 17.

Grâce à la présente invention, en prévoyant des moyens d'actionnement conformés pour entraîner une porte de tuyère secondaire à la fois en translation vers l'amont de la nacelle et en rotation vers l'extérieur de la nacelle, on limite l'amplitude d'ouverture de la porte tout en satisfaisant aux exigences de variation de la section de sortie de la tuyère.

En d'autres termes, une telle cinématique d'ouverture de la porte permet de déplacer la porte dans une position qui permet de rediriger le flux d'air secondaire s'échappant de l'ouverture de la nacelle vers l'aval de la nacelle, en direction de l'axe longitudinal de la nacelle, le long de la paroi externe du capotage externe de la nacelle.

On limite ainsi par rapport à l'art antérieur la divergence du flux d'air qui s'échappe de l'ouverture, ce qui permet de maîtriser et d'améliorer sensiblement la performance aérodynamique de la nacelle.

Ainsi, en rendant convergent le flux d'air secondaire qui s'échappe de l'ouverture prévue dans le capotage externe de la nacelle, on améliore, *in fine*, les performances de poussée de l'ensemble propulsif.

De plus, la portion extrême aval continue de la tuyère permet d'augmenter sensiblement la tenue structurale de la nacelle.

Enfin, comme il va de soi, l'invention ne se limite pas aux seules formes de réalisation de cette nacelle, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention.

## Revendications

1. Nacelle (1) pour turboréacteur d'aéronef comprenant :
- une structure interne fixe (2) définissant au moins partiellement un carénage d'un turboréacteur,
- un capotage externe (3) comprenant une section amont (5) et une section aval (7), ladite section aval comprenant une paroi externe (65) et une paroi interne définissant, avec la structure interne fixe (2), un canal annulaire (15) d'écoulement d'un flux d'air secondaire, ladite section aval comprenant une tuyère (9) d'éjection dudit flux d'air secondaire, ladite tuyère comprenant :
∘ au moins une ouverture (19) définie dans la section aval du capotage externe,
∘ au moins une portion extrême aval continue (21), en aval de ladite ouverture,
∘ au moins une porte (17), traitée acoustiquement ou non, mobile alternativement, lors de l'activation de moyens d'actionnement, entre une position de fermeture obturant ladite ouverture et assurant une continuité aérodynamique de la nacelle, et une position d'ouverture autorisant le passage d'au moins une partie du flux d'air secondaire à travers ladite ouverture (19), depuis le canal annulaire (15) vers l'extérieur (31) de la nacelle,
ladite nacelle étant **caractérisée en ce que** les moyens d'actionnement sont conformés, lors de l'activation desdits moyens depuis une position de fermeture vers une position d'ouverture de la porte, pour entraîner ladite porte (17) en un mouvement combiné de translation vers l'amont de la nacelle et de rotation vers l'extérieur de la nacelle et **en ce que** les moyens d'actionnement comprennent :
- au moins un actionneur (51) comprenant un corps amont solidaire d'une partie fixe de la nacelle, et une tige (53) dont une extrémité est directement reliée à une paroi amont (37) de ladite porte (17), et
- au moins une bielle (55) dont une extrémité (57) est reliée au capotage externe (3) de la nacelle et l'autre extrémité (61) est reliée à la porte (17) de la tuyère (9).

2. Nacelle (1) selon la revendication 1, **caractérisée en ce que** la porte (17) comprend un bord de fuite (43) conformé pour recouvrir au moins partiellement la portion extrême aval continue (21) de la tuyère (9).

3. Nacelle (1) selon la revendication 2, **caractérisée en ce que** le bord de fuite (43) de la porte (17) présente un profil courbe (44).

4. Nacelle (1) selon l'une des revendications 2 ou 3, **caractérisée en ce que** le bord de fuite (43) de la porte (17) présente un profil effilé de sorte que la tangente à l'intrados de la porte est sensiblement parallèle à la paroi de la portion extrême aval continue (21) positionnée en regard dudit bord de fuite.

5. Nacelle (1) selon l'une quelconque des revendications 1 à 4, **caractérisée en ce qu'**elle comprend des moyens d'étanchéité disposés entre la porte (17) et le capotage externe (3) agencés pour s'opposer à l'écoulement de l'air sur le pourtour de la porte (17) et à travers l'ouverture (19) lorsque la porte (17) est en position fermée.

6. Nacelle (1) selon l'une quelconque des revendications 1 à 5, **caractérisée en ce que** la porte (17) ou le capotage externe (3) comprend en outre au moins une bavette latérale (89) fixe ou mobile à proximité de l'ouverture (19).

7. Nacelle (1) selon l'une quelconque des revendications 1 à 6, **caractérisée en ce que** la section amont (5) du capotage externe (3) et la portion extrême aval continue (21) de la tuyère (9) sont réalisées d'un seul tenant.

8. Nacelle (1) selon l'une quelconque des revendications 1 à 7, **caractérisée en ce qu'**elle comprend en outre un dispositif d'inversion de poussée.

## Patentansprüche

1. Gondel (1) für ein Flugzeugtriebwerk, umfassend:
- eine feste innere Struktur (2), die mindestens teilweise eine Verkleidung eines Triebwerks definiert,
- eine äußere Abdeckung (3), die einen stromaufwärtigen Bereich (5) und einen stromabwärtigen Bereich (7) umfasst, wobei der stromabwärtige Bereich eine äußere Wand (65) und eine innere Wand umfasst, die mit der festen inneren Struktur (2) einen ringförmigen Strömungskanal (15) eines sekundären Luftstroms bilden, wobei der stromabwärtige Bereich eine Ausströmdüse (9) des sekundären Luftstroms umfasst, wobei die Düse umfasst:
∘ mindestens eine Öffnung (19), die im stromabwärtigen Bereich der äußeren Abdeckung definiert ist,
∘ mindestens einen durchgehenden stromabwärtigen Endabschnitt (21) stromabwärts der Öffnung,
∘ mindestens eine Klappe (17), akustisch behandelt oder nicht, die bei der Aktivierung von Betätigungsmitteln wechselweise zwischen einer Schließstellung, welche die Öffnung verschließt und eine aerodynamische Durchgängigkeit der Gondel sicherstellt, und einer Öffnungsstellung beweglich ist, welche den Durchtritt von mindestens einem Teil des sekundären Luftstroms durch die Öffnung (19) hindurch vom ringförmigen Kanal (15) zur Außenseite (31) der Gondel hin gestattet,
wobei die Gondel **dadurch gekennzeichnet ist, dass** die Betätigungsmittel dafür ausgebildet sind, bei der Aktivierung der Mittel von einer Schließstellung zu einer Öffnungsstellung der Klappe hin die Klappe (17) in einer kombinierten Translations-, zur stromaufwärtigen Seite der Gondel hin, und Drehbewegung zur Außenseite der Gondel hin anzutreiben, und dadurch, dass die Betätigungsmittel umfassen:
- mindestens einen Aktor (51), der einen fest mit einem festen Teil der Gondel verbundenen stromaufwärtigen Körper und eine Stange (53) umfasst, von der ein Ende direkt mit einer stromaufwärtigen Wand (37) der Klappe (17) verbunden ist, und
- mindestens ein Pleuel (55), von dem ein Ende (57) mit der äußeren Abdeckung (3) der Gondel verbunden ist, und das andere Ende (61) mit der Klappe (17) der Düse (9) verbunden ist.

2. Gondel (1) nach Anspruch 1, **dadurch gekennzeichnet, dass** die Klappe (17) eine Abströmkante (43) umfasst, die dafür ausgebildet ist, den durchgehenden stromabwärtigen Endabschnitt (21) der Düse (9) mindestens teilweise zu bedecken.

3. Gondel (1) nach Anspruch 2, **dadurch gekennzeichnet, dass** die Abströmkante (43) der Klappe (17) ein gekrümmtes Profil (44) aufweist.

4. Gondel (1) nach einem der Ansprüche 2 oder 3, **dadurch gekennzeichnet, dass** die Abströmkante (43) der Klappe (17) ein derart verjüngtes Profil aufweist, dass die Tangente an der Laibung der Klappe im Wesentlichen zu der der Abströmkante zugewandt positionierten Wand des durchgehenden stromabwärtigen Endabschnitts (21) parallel ist.

5. Gondel (1) nach einem der Ansprüche 1 bis 4, **dadurch gekennzeichnet, dass** sie zwischen der Klappe (17) und der äußeren Abdeckung (3) angeordnete Dichtungsmittel umfasst, die dafür eingerichtet sind, sich der Strömung der Luft am Umfang der Klappe (17) und durch die Öffnung (19) hindurch zu widersetzen, wenn sich die Klappe (17) in geschlossener Stellung befindet.

6. Gondel (1) nach einem der Ansprüche 1 bis 5, **dadurch gekennzeichnet, dass** die Klappe (17) oder die äußere Abdeckung (3) weiter mindestens eine feste oder bewegliche Seitenschürze (89) in Nähe der Öffnung (19) umfasst.

7. Gondel (1) nach einem der Ansprüche 1 bis 6, **dadurch gekennzeichnet, dass** der stromaufwärtige Bereich (5) der äußeren Abdeckung (3) und der durchgehende stromabwärtige Endabschnitt (21) der Düse (9) aus einem Stück ausgeführt sind.

8. Gondel (1) nach einem der Ansprüche 1 bis 7, **dadurch gekennzeichnet, dass** sie weiter eine Schubumkehrvorrichtung umfasst.

## Claims

1. A nacelle (1) for an aircraft turbojet engine comprising:
- an inner fixed structure (2) defining at least partially a fairing of a turbojet engine,
- an outer cowling (3) comprising an upstream section (5) and a downstream section (7), said downstream section comprising an outer wall (65) and an inner wall defining, together with the inner fixed structure (2), an annular flow channel (15) of a secondary air flow, said downstream section comprising an ejection nozzle (9) of said secondary air flow, said nozzle comprising:
∘ at least one opening (19) defined in the downstream section of the outer cowling,
∘ at least one continuous downstream extreme portion (21), downstream of said opening,
∘ at least one door (17), whether acoustically treated or not, alternately movable, during the activation of the actuation means, between a closed position sealing said opening and ensuring aerodynamic continuity of the nacelle, and an open position enabling the passage of at least one portion of the secondary air flow through said opening (19), from the annular channel (15) toward the outside (31) of the nacelle,
said nacelle being **characterized in that** the actuation means are shaped, during the activation of said means from a closed position toward an open position of the door, so as to drive said door (17) in a combined movement of translation toward the upstream of the nacelle and rotation toward the outside of the nacelle and **in that** the actuation means comprise:
- at least one actuator (51) comprising an upstream body secured to a fixed portion of the nacelle, and a rod (53) having one end directly linked to an upstream portion (37) of said door (17), and
- at least one connecting rod (55) having one end (57) linked to the outer cowling (3) of the nacelle and the other end (61) is linked to the door (17) of the nozzle (9).

2. The nacelle (1) according to claim 1, **characterized in that** the door (17) comprises a trailing edge (43) shaped so as to cover at least partially the continuous downstream extreme portion (21) of the nozzle (9).

3. The nacelle (1) according to claim 2, **characterized in that** the trailing edge (43) of the door (17) presents a curved profile (44).

4. The nacelle (1) according to any of claims 2 or 3, **characterized in that** the trailing edge (43) of the door (17) presents a slender profile so that the tangent to the intrados of the door is substantially parallel to the wall of the continuous downstream extreme portion (21) positioned opposite said trailing edge.

5. The nacelle (1) according to any one of claims 1 to 4, **characterized in that** it comprises sealing means disposed between the door (17) and the outer cowling (3) arranged to resist the flow of air over the circumference of the door (17) and through the opening (19) when the door (17) is in the closed position.

6. The nacelle (1) according to any one of claims 1 to 5, **characterized in that** the door (17) or the outer cowling (3) further comprises at least one fixed or movable lateral sealing flap (89) in the proximity of the opening (19).

7. The nacelle (1) according to any one of claims 1 to 6, **characterized in that** the upstream section (5) of the outer cowling (3) and the continuous downstream extreme portion (21) of the nozzle (9) are integrally made in one piece.

8. The nacelle (1) according to any one of claims 1 to 7, **characterized in that** it further comprises a thrust reverser device.
